# EUROPEAN PATENT SPECIFICATION

(11) **EP 3 515 797 B1**
(45) Date of publication and mention of the grant of the patent: **07.07.2021**
(21) Application number: 17788292.5
(22) Date of filing: 19.09.2017
(51) Int. Cl.: B62D 53/12, B62D 53/08

(54) **INTERCONNECTION SYSTEM BETWEEN A TRACTOR AND A TRAILER**
VERBINDUNGSSYSTEM ZWISCHEN EINEM ZUGFAHRZEUG UND EINEM ANHÄNGER
SYSTÈME D'INTERCONNEXION ENTRE UN TRACTEUR ET UNE REMORQUE

(30) Priority: 19.09.2016 IT 201600093812
(43) Date of publication of application: 31.07.2019
(73) Proprietor: Iveco S.p.A., 10156 Torino (IT)
(72) Inventor: MARANDO, Francesco, 10088 Volpiano (IT); VERGANO, Raffaele, 10020 Cambiano (IT)
(74) Representative: Bongiovanni, Simone
(86) International application number: PCT/IB2017/055675
(87) International publication number: WO 2018/051320

(56) References cited:
- EP-A2- 0 319 765
- EP-A2- 0 319 766
- EP-A2- 1 240 067
- WO-A1-2009/112554
- WO-A1-2010/060125
- DE-A1-102006 061 412
- DE-B- 1 252 077
- DE-B3- 10 347 561
- GB-A- 764 435
- GB-A- 825 821
- US-A- 3 399 907
- US-A- 5 529 329
- US-A1- 2001 022 731
- US-A1- 2012 001 404
- US-A1- 2012 153 597
- US-B1- 6 222 443

## Description

### Technical field of the invention

The invention relates to the field of vehicle fifth wheels, for the interconnection of a road tractor and a semi-trailer.

### State of the art

The fifth wheel is one of the parts concerning the mechanical fifth wheel/pin coupling between a road tractor and a semi-trailer, so as to build a trailer tuck. The fifth wheel is associated with the tractor, whereas the pin is associated with the semi-trailer.

This is a very complex interconnection system, as the fifth wheel not only has to tow, but also has to support a significant part (approximately 1/3) of the load placed in the semi-trailer.

The fifth wheel comprises a sturdy steel plate with a central hole and a recess for the articulation pin.

Hereinafter said central hole will be referred to as seat of the pin.

The recess is designed with a dovetail shape, so that the tractor and the semi-trailer can be coupled to one another even if they are not perfectly aligned. The aforesaid plate is fitted on a frame, which, in turn, is constrained to the frame of the road tractor, so as to avoid excessive stresses on the latter; it has a limited oscillation movement with respect to the frame of the tractor, both transversely and longitudinally, which helps it overcome bumps, gutters or simple irregularities of the road surface.

The angles forming between the longitudinal development of the tractor and the longitudinal development of the semi-trailer are possible thanks to the rotation of the pin inside the relative seat of the fifth wheel.

Therefore, the pin and the fifth wheel define, when they are operatively interconnected, a horizontal hinge, namely a hinge with a vertical axis, which allows the tractor to deviate, in the horizontal plane, with respect to the longitudinal development of the semi-trailer with angles exceeding 90°.

When the tractor needs to be connected to a semi-trailer, the driver drives the tractor in such a way that the fifth wheel inserts the pin in the recess and then lifts the tractor acting upon the pneumatic suspensions, so that the pin can get into the central hole of the fifth wheel, which is complementary to the pin.

Subsequently, electrical and pneumatic connection between the tractor and the semi-trailer must be crated manually.

A known solution, which allows users to simultaneously connect the vehicle and the electrical connections between the tractor and the semi-trailer, is disclosed in WO9965714, wherein the electrical connection is created between the contact surfaces of the mechanical connection elements used to tow the trailer, through electrical contacts.

The electrical interconnection according to the solution of WO9965714 is "automatic" or "intrinsic", as the electrical connection is created upon creation of the mechanical connection, which allows the trailer to be towed. Hence, common structural components are used both for the mechanical towing interconnection and for the electrical interconnection.

This solution can be used only in trailers and semi-trailers that are intended for limited loads and a moderate use.

In heavy vehicles, which are designed to cover millions of kilometres with the semi-trailer attached to them, a solution like the one discussed above cannot be used for durability and reliability reasons.

Examples of known systems are disclosed in published documents US5529329 A, GB764435 A, GB825821 A, EP0319766 A1, WO2010060125 A1, DE1252077 B, EP0319765 A2, EP1240067 A1, US2012153597 A1, US6222443 B1, DE10347561 B3 or US2012001404 A1.

### Summary of the invention

According to the above, the present invention is aimed to provide a fifth wheel/pin interconnection system, specifically indicated for industrial vehicles, which permits an automatic or intrinsic electrical interconnection in the mechanical towing connection.

It must be clear that a semi-trailer, thanks to the mechanical interconnection, not only can be towed by the relative tractor, but is also supported by the tractor, as mentioned above.

The idea on which the invention is based is that of creating a fixed coupling between the pin and the relative seat in the fifth wheel, shifting the necessary horizontal hinging between tractor and semi-trailer between the fifth wheel and a relative support frame or between the pin and the frame of semi-trailer.

By fixed coupling we mean a coupling that does not allow any degree of freedom between the pin and the relative seat in the fifth wheel.

Thanks to the fixed coupling between the pin and the fifth wheel, further connections can be created between the tractor and the semi-trailer, such as for example a pneumatic connection between the tractor and the semi-trailer and/or an electrical connection directly in the pin/fifth wheel coupling.

The fact that the pin and the fifth wheel are interconnected to one another so as to stop any mutual rotation ensures an extreme reliability of the mutual pneumatic connection.

Possible articulations between fifth wheel and tractor or between pin and trailer can be provided in order to allow the tractor to deviate with respect to the longitudinal development of the semi-trailer.

Said coupling allows the electrical system of the semi-trailer to be powered, whereas the lights are controlled by means of a pair of transceivers, a first one being associated with the electrical system of the tractor and a second one being associated with the electrical system of the semi-trailer so that the switching-on of a light of the tractor is replicated in the semi-trailer.

The interconnection between the arm and the point of the fifth wheel takes place under the plane of contact between fifth wheel and pin. By so doing, electrical signals are transferred to the lights of the semi-trailer through the fifth wheel. Therefore, electrical connection between tractor and semi-trailer is automatic or intrinsic with respect to the mechanical interconnection thereof. For a correct alignment between pin and fifth wheel, different centring devices can be used, for example a retractable vane or a specific shape of the pin, which forces the pin or the fifth wheel to rotate.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows a view from above of a fifth wheel according to the invention and of a relative support frame;
figure 2 shows a vertical-longitudinal section of the fifth wheel of figure 1 with a relative pin during the insertion step;
figure 3 shows a front view of the fifth wheel of figures 1 and 2;
figure 4 shows a horizontal section of the fifth wheel of figure 1;
figure 5 shows a perspective view of the fifth wheel of figure 1;
figure 6 shows a vertical-cross section of the fifth wheel of the previous figures, with the relative pin inserted in the seat of the fifth wheel;
figure 7a shows a horizontal section of an example of locking of the pin shown in figure 6, whereas figure 7b shows a similar locking system acting in a different direction with respect to the one of figure 7a;
figure 8 shows a lateral view of the fifth wheel/pin system with transparent parts according to a preferred variant of the invention;
figure 9 shows a lateral view of the sole pin of figure 8;
figure 10 shows a view from above of a variant of the fifth wheel of figure 1 combined with the variant of figures 8 and 9;
figures 11a and 11b show horizontal sections of the fifth wheel and of the pin, which permit a mutual alignment when the tractor closes up to the semi-trailer;
figure 12 shows a horizontal section of the fifth wheel of figure 1 according to another preferred variant of the invention and a relative pin;
figures 13a and 13b show two lateral views of the pin corresponding to the fifth wheel of the variant of figure 12 according to a first variant 13a, in which the horizontal hinge is arranged between the pin and the frame of the semi-trailer, and a second variant 13b, in which the horizontal hinge is arranged between the fifth wheel and the frame of the tractor;
figure 14 shows a heavy vehicle comprising a tractor and a semi-trailer, which are interconnected to one another by means of the interconnection system according to the previous figures;
figure 15 shows a schematic example of an electrical circuit of the tractor and of an electrical circuit of the semi-trailer inter-operating thanks to the mechanical connection of the fifth wheel/pin connection system according to the previous figures.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

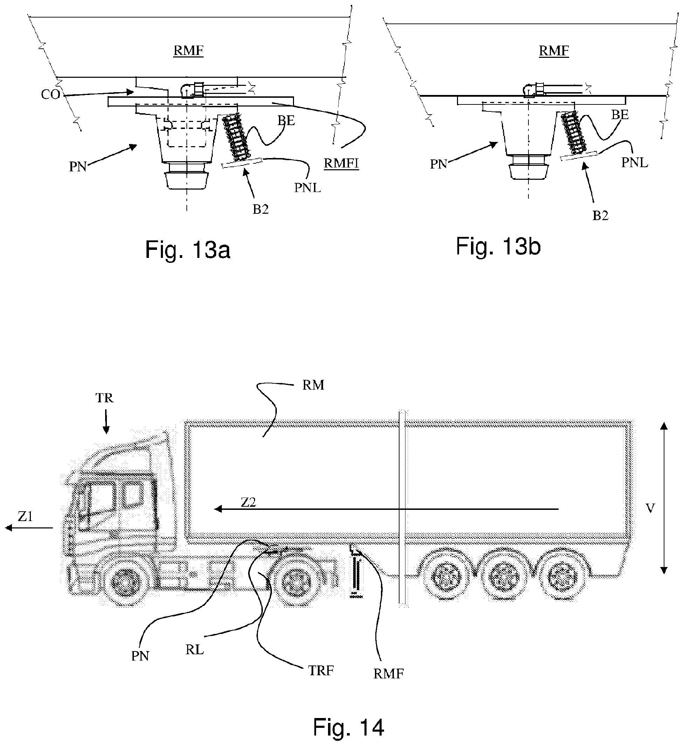

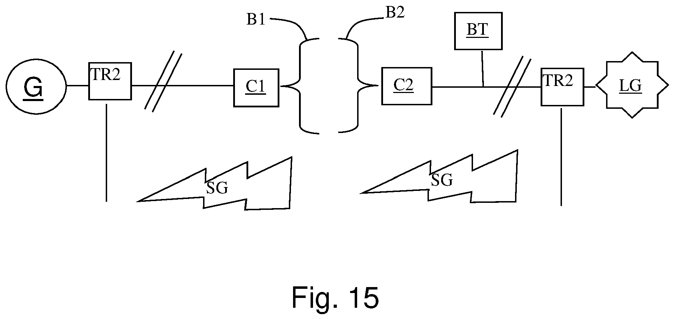

Figure 14 shows a road tractor RT connected to a relative semi-trailer. The road tractor is provided with an engine, usually at least one internal combustion engine, which causes the rotation of an electrical generator G, see also figure 15, which powers different utilities on board the tractor and, when the semi-trailer is connected, also powers different utilities on board the semi-trailer. The main utility on board the semi-trailer is the relative set of lights LG, which is arranged at the back and comprises position lamps, stop lamps and direction indicators.

The internal combustion engine further causes the rotation of a compressor, which fills at least one tank with compressed air. In heavy vehicles, indeed, brakes are pneumatic and so are some or all of the axles of the tractor ad/or semi/trailer.

Therefore, the tractor supplies the semi-trailer both in terms of electrical energy and in terms of compresses air.

The idea on which the invention is based is that of providing the fifth wheel with a mechanical lock, which, hence, is capable of locking the pin PN of the trailer inside the seat SD of the fifth wheel RL and of moving the horizontal hinge between the fifth wheel and the frame TFR of the tractor or between the pin and the frame RMF of the semi-trailer, which allows the vehicle to run along curves, thus allowing the axis Z1 defined by the longitudinal development of the tractor to be deflected, namely not aligned, with respect to the axis Z2 defined by the longitudinal development of the semi-trailer on the horizontal plane, namely on the earth surface.

Therefore, the horizontal hinge has a vertical rotation axis, namely perpendicular to the earth surface.

Preferably, the lock can be directly controlled from the driver's cabin of the tractor.

The mechanical interconnection system between a tractor TR and a semi-trailer RM according to the invention comprises
- a fifth wheel RL adapted to be connected to a first frame TRF of said tractor unit and having a seat SD for a pin and
- a towing pin PN adapted to be connected to a second frame RMF of said semi-trailer and complementary to said seat SD of said fifth wheel RL,
wherein the fifth wheel is connected to the relative frame so as to be able to oscillate transversally OT and longitudinally OL with respect to the longitudinal development Z1 of the tractor, and wherein the fifth wheel comprises a locking device LK adapted to completely lock the pin in the seat, and wherein said interconnection system comprises a horizontal hinge ES, CO to allow a deviation in the horizontal plane of said tractor with respect to a longitudinal development Z2 of said semi-trailer, arranged in a point between said fifth wheel and said first frame and/or between said pin and said second frame.

The oscillations OT and OL are usually allowed to the fifth wheel by means of two orthogonal hinges, which connect the fifth wheel to the frame of the tractor. These are known solutions.

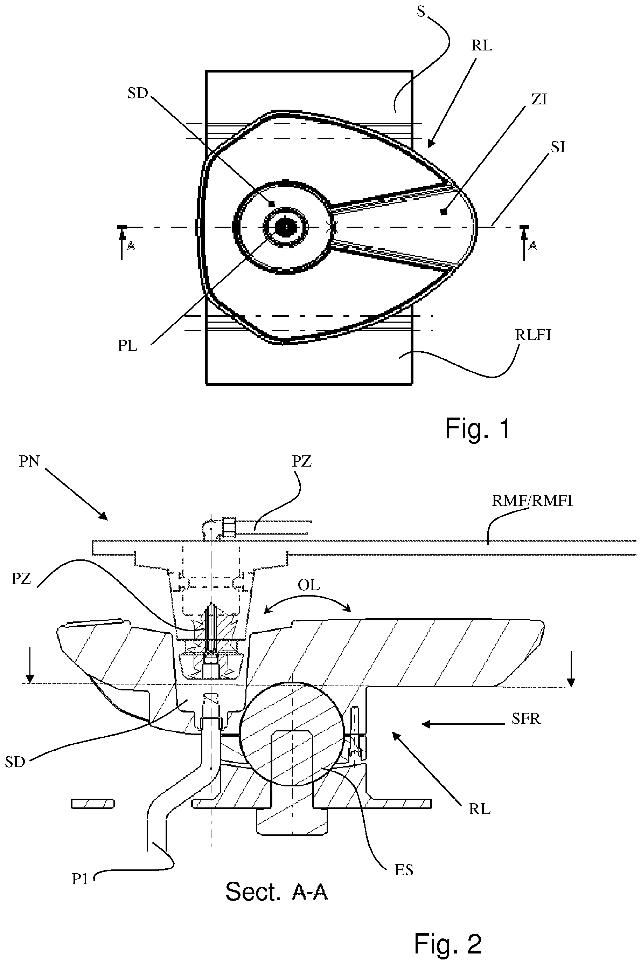

According to a first preferred variant of the invention, a third hinge is introduced so as to permit the aforesaid deflection. More preferably, the three hinges are replaced by a ball joint ES shown for example in figures 2, 4 and 12, but this is not absolutely essential.

As a matter of fact, US5529329 shows two orthogonal hinges, both having a horizontal axis: one longitudinal and one transverse, respectively, to the development of the tractor, so as to allow the fifth wheel to oscillate back and forth and laterally. Unlike US5529329, we need to add a horizontal hinge between the fifth wheel and the frame of the tractor, as - according to the invention - the pin and the fifth wheel, when they are operatively interconnected, are completely fixed with respect to one another.

Alternatively, according to the invention, a horizontal hinge CO is introduced between the pin and the frame of the semi-trailer.

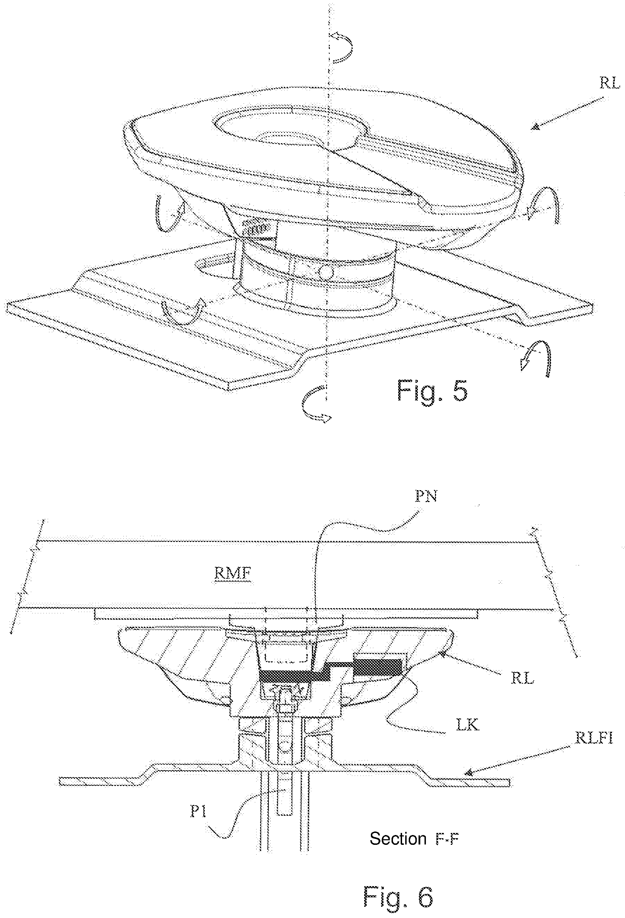

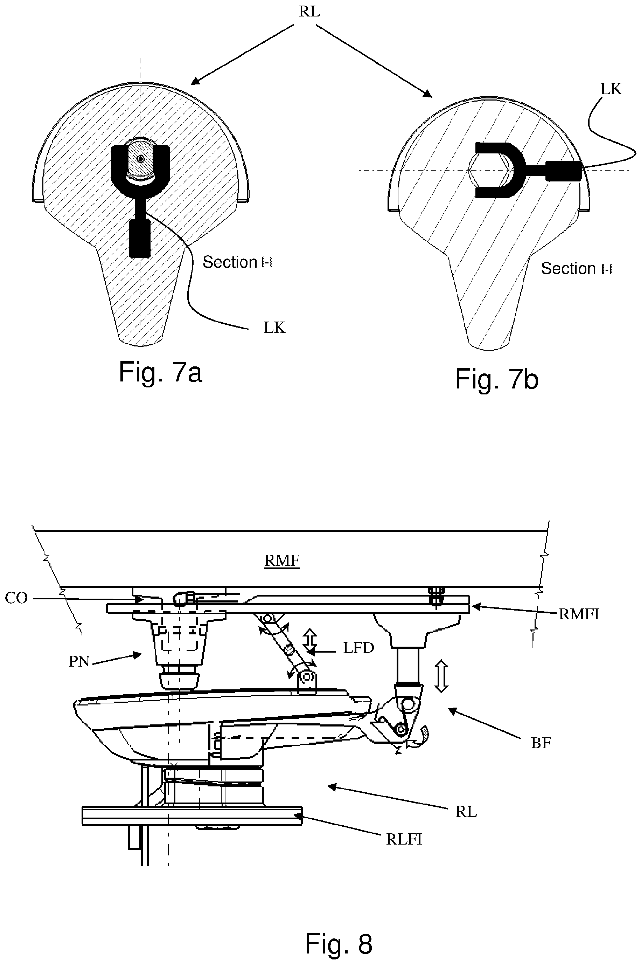

The mechanical locking device is shown, for example, in figures 6, 7a and 7b.

In these figures, the locking device is shown in black and defines the shape of a fork that can slide inside the fifth wheel, in a horizontal plane, operated by a linear actuator, so as to intercept the pin PN and lock it in the seat SD. Evidently, the pin has lateral facets, which allow the fork to be fitted on it, thus locking its rotation.

Obviously, other locking systems can be designed and used to reach the same object. For example, the pin can have the shape of a parallelepiped and the locking device intercepts a groove of the pin so as to prevent it from being disengaged from the fifth wheel.

The fifth wheel, as you can see in the figures, is substantially almond-shaped and has an upper surface which faces the frame of the semi-trailer.

Inside this upper surface there is a lowered surface ZI, which is V-shaped so as to guide the pin into the seat when the tractor closes up to the semi-trailer, wherein said lowered surface has an axis of symmetry SI, see figure 1.

Said lowered surface is preferably covered by a resistant, though elastic material, such as for example Teflon, polytetrafluoroethylene (PTFE).

According to a preferred variant of the invention, the seat SD comprises a first pneumatic coaxial duct P1 and the pin comprises a second pneumatic coaxial duct P2, which are arranged so that, when the pin is inserted in the seat, they are pneumatically interconnected. By so doing, the pneumatic circuit of the tractor is operatively connected to the pneumatic circuit of the semi-trailer.

The pneumatic ducts P1 and P2, besides being coaxial to the pin, can be coaxial in the sense that they each define a double coaxial duct. Indeed, it is known that there must be at least two pneumatic connections between tractor and semi-trailer: brake and graduated release. In order to simplify the manufacturing of the fifth wheel assembly, they are preferably coaxial, but we do not exclude the use of different and alternative solutions.

Preferably, the first pneumatic duct and the second pneumatic duct are arranged coaxial to the respective longitudinal developments of the pin and of the respective complementary seat, see - in particular - figure 2.

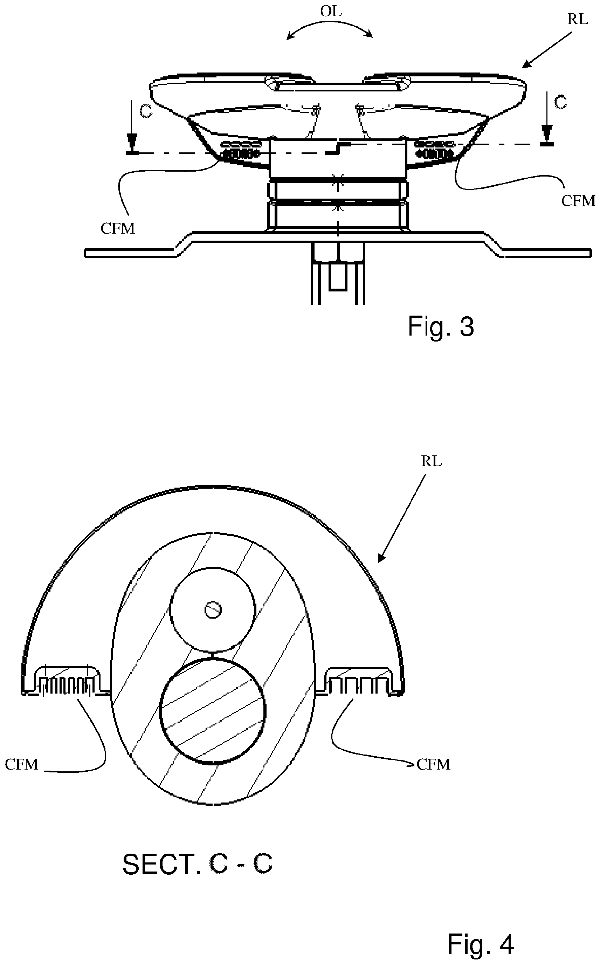

The fifth wheel has a frontal surface SFR, shown in particular in figure 3, which is perpendicular to the aforesaid axis of symmetry SI and faces the semi-trailer at least during the closing manoeuvre.

By closing manoeuvre we mean the know manoeuvre during which the tractor moves in reverse to be coupled to the semi-trailer. Generally speaking, once the pin starts entering the seat, the tractor lifts thanks to the height-adjustable pneumatic suspensions, thus forcing the pin to get into the seat. The disengagement of the pin is not possible due to the weight force acting upon the semi-trailer, but it could anyway rotate, if it had the shape of a rotation solid; however, the locking device forbids any king of rotation.

In the aforesaid frontal surface, in particular according to the variant shown in figures 3 - 5, there is housed a female (or male) electrical connector CFM, which is operatively connected to the on-board electrical circuit CET of the tractor.

According to this preferred variant of the invention, the semi-trailer is provided with a male (or female) connector CMS, which is complementary to said female (or male) connector.

This male (or female) connector is fixed on an arm (BF) floating in a vertical direction.

It is known that a male connector is said to be complementary to a female connector when one can be operatively connected to the other one in order to create and electrical connection between at least one pair of electrical connectors.

This is known, in general, in the field of electrical connections and, in particular, in the field of articulated vehicles, like in this case, where manufacturers need to transfer electrical energy and/or electrical controls from the tractor to the semi-trailer.

Said arm BF has a first end, which is directly or indirectly connected to the frame RMF of the semi-trailer, and a second vertically floating end, on which said male (or female) connector is fixed.

The ability to vertically oscillate allows the arm to follow the lifting movement of the tractor during the semi-trailer hooking procedure.

The fifth wheel has the female (or male) connector in a vertical surface facing the semi-trailer, so that the electrical connection is under the plane of contact between the fifth wheel and the semi-trailer.

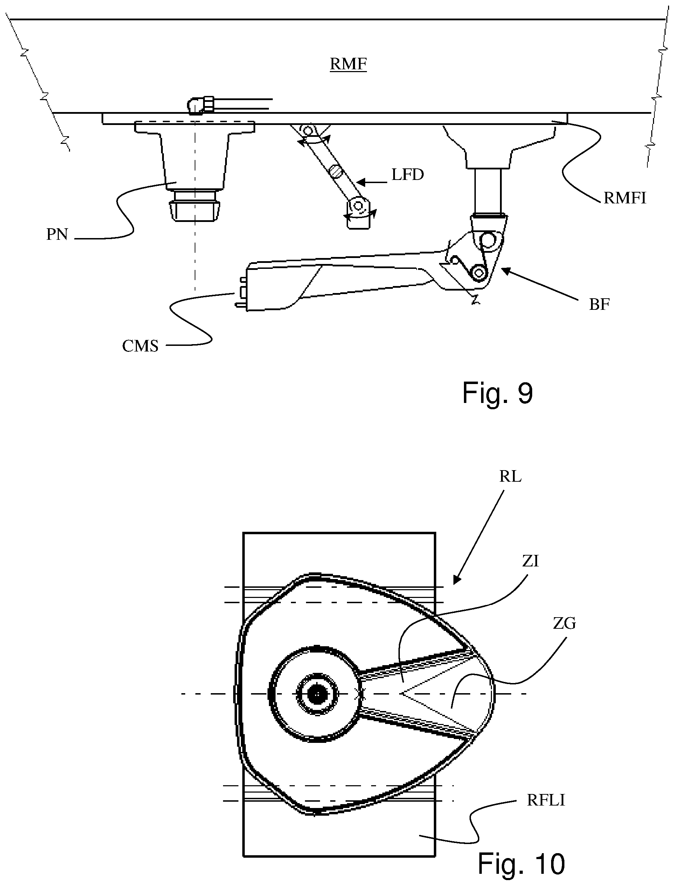

In case the aforesaid horizontal hinge is arranged between the fifth wheel and the frame of the tractor, the arm can be connected to the frame RMF of the semi-trailer in a fixed manner, see figure 9.

When, on the other hand, the horizontal hinge CO is arranged between the pin and the frame of the semi-trailer, the pin and the arm BF are supported, in an integral manner with respect to one another, by an intermediate frame RMFI, which, in turn, is hinged to the frame of the semi-trailer RMF by means of the aforesaid horizontal hinge CO, preferably coaxial to the longitudinal development of the pin PN. In this way, the arm, besides being vertically floating, can oscillate with respect to the vertical axis of the horizontal hinge, though always remaining aligned with the fifth wheel, namely with the aforesaid axis of symmetry SI.

Only during the semi-trailer hooking procedure you need to make sure that the arm BF and the axis SI of the fifth wheel are aligned. Subsequently, the pin becomes integral to the fifth wheel and, therefore, the intermediate frame follows the movements of the fifth wheel.

If, on the other hand, you use three hinges or a ball joint between the fifth wheel and the frame of the tractor, you can connect the pin and at least one floating arm directly on the frame of the semi-trailer, namely without implementing an intermediate frame hinged on the frame of the semi-trailer.

In order to ensure said alignment of the fifth wheel with the arm of the semi-trailer, both through the implementation of the horizontal hinge between the fifth wheel and the frame of the tractor and through the implementation of the hinge between the pin and the frame of the semi-trailer, different systems can be implemented: according to a first variant of the invention, a guide arm GFD is hinged to the intermediate frame and hangs downwards. Complementary to said guide arm, there is a further lowered surface ZG inside the aforesaid lowered surface ZI, see figure 10, which also is V-shaped and symmetrical with respect to the axis SI and forces the guide arm to align the intermediate frame RMFI around the horizontal hinge in order to align the arm BF with the fifth wheel, thus allowing the electrical connectors CFM/CMS to be correctly coupled.

According to another preferred variant of the invention, the alignment between the fifth wheel and the portion of electrical connections supported by the semi-trailer is obtained through the shape of the pin and of the respective seat and through the shape of the lowered surface ZI.

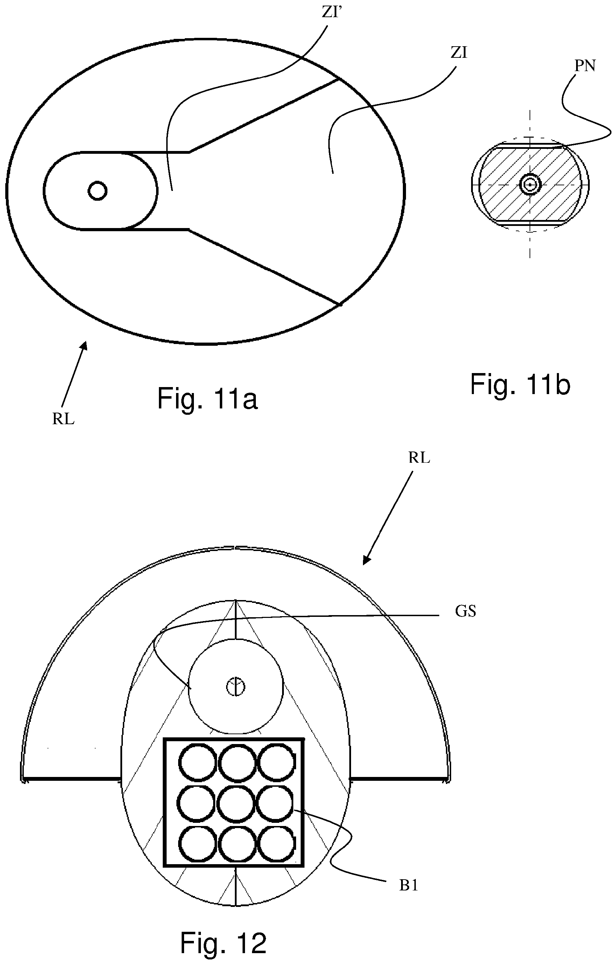

Figures 11a and 11b show a view from above of the fifth wheel and a horizontal section of the pin, respectively. You can see that both the pin and the respective complementary seat have a pseudo-elliptical shape, which means that the opposite sides of the ellipse are squeezed and straightened parallel to the main axis of the ellipse.

The lowered surface ZI, which defines the recess and the guide of the pin into the seat during the aforesaid closing manoeuvre, comprises, between the V-shaped area and the seat SD, a segment with parallel walls ZI', which force the pin or the fifth wheel to rotate in order to align themselves with one another, similarly to the aforesaid area ZG.

Owing to the above and to the drawings shown in figures, the fifth wheel is symmetrical with respect to the aforesaid axis of symmetry SI. According to a preferred variant of the invention, there are two female (or male) connectors CFM and they are arranged symmetrically under the aforesaid almond shape of the fifth wheel, on said frontal surface SFR. Therefore, the semi-trailer can be provided with a pair of floating arms, which are arranged in a corresponding manner so as to intercept said connectors CFM during said closing manoeuvre.

According to another preferred variant of the invention, the fifth wheel comprises, in said upper surface, first electromagnetic induction coils B1, see figure 12, whereas the pin is associated with a panel PNL, which houses second electromagnetic induction coils B2, wherein said panel is connected to the frame or intermediate frame of the semi-trailer, so that, when the pin is inserted in the seat SD, the panel faces the upper surface of the fifth wheel in such a way that the first coils and the second coils are electromagnetically coupled and, hence, can inter-operate to transfer electrical energy from the electrical circuit CET of the tractor to the electrical circuit CER of the semi-trailer.

The same alignment devices described above in the variant with floating arm and axis SI of the fifth wheel can be also implemented in this variant, should you need to ensure an alignment between the coils B1 and B2.

Indeed, the coils can be distributed so as to ensure a sufficient coupling even when there is an angular offset between the fifth wheel and the longitudinal development Z2 of the semi-trailer.

Preferably, the coils B1 are integrated in a plastic layer arranged between the metal upper surface of the fifth wheel and the Teflon layer covering it, or they can be buried in the Teflon.

The panel PNL, which is integral to the pin and is provided with the coils B2, is preferably supported by means of an oblong elastic element BE, which keeps the panel in contact with the upper part of the fifth wheel, ensuring an air gap with a small thickness.

Figure 15 shows a preferred example of a system for supply and control of the lights LG of a semi-trailer, which can be implemented with or without the mechanical interconnection system between said road tractor and semi-trailer described above.

The road tractor, as it is known, comprises a first electrical circuit CET and the semi-trailer comprises its own electrical circuit CER, which powers a rear set of lights LG, wherein said second circuit is powered by said first circuit by means of said inter-operation of said first coils B1 with said second coils B2.

The switching on/off of the lights or of other devices on board the semi-trailer is controlled by means of a wireless transmitter TR1 and of a wireless receiver TR2, the first one being associated with the tractor and the second one being associated with the semi-trailer.

The transmitter is powered by the electrical circuit CET of the tractor, whereas the receiver is powered by the electrical circuit of the semi-trailer.

The receiver is adapted to receive control signals to control the switching-on of said rear lights or of other utilities on board the semi-trailer, whereas the wireless transmitter TR1, which is complementary to said wireless receiver, is adapted to transit control signals for said rear lights, for example replicating the operation of the lights of the road tractor TR.

When this supply system is not implemented in combination with the aforesaid mechanical interconnection system, thus using a known fifth wheel and a known pin, which - hence - cooperate to create a horizontal hinge, the electrical circuit on board the semi-trailer preferably comprises a buffer battery BT to ensure enough energy for the electrical utilities on board the semi-trailer even when the alignment between the coils B1 and B2 is not ideal.

Figure 15 shows a double-wire DC electrical circuit. It is known that the coils B1 and B2, in order to inter-operate, can need alternating current; therefore, the device C1 can be provided on board the tractor in order to power the coil B1 and the device C2 can be provided on board the semi-trailer in order to condition or rectify the electrical signal obtained from the coil B2. Anyway, they are all devices known to a person skilled in the art.

On the other hand, when the system to transfer electrical energy between the tractor and the semi-trailer, both with floating arm and with electromagnetic induction coils, is implemented in combination with the fifth wheel/pin mechanical interconnection system described above, the driver of the tractor can interconnect the tractor with the semi-trailer mechanically, electrically and pneumatically as well as avoid having to get out of the tractor, as he/she can control the lifting of the stabilizers directly from the tractor.

The non-limiting example described above can be subjected to variations, without for this reason going beyond the scope of protection of the invention.

When reading the description above, a skilled person can carry out the subject-matter of the invention without introducing further manufacturing details.

## Claims

1. A mechanical interconnection system between a road tractor (TR) and a semi-trailer (RM) comprising:
- a fifth wheel (RL) adapted to be connected to a first frame (TRF) of said road tractor and having a seat (SD) for a pin and
- a pin (PN) adapted to be connected to a second frame (RMF) of said semi-trailer and complementary to said seat (SD) of said fifth wheel (RL),
wherein said fifth wheel (RL) is connected to said first frame so as to oscillate transversally (OT) and longitudinally (OL) with respect to a longitudinal development (Z1) of said road tractor (TR), wherein said fifth wheel (RL) comprises a locking device (LK) adapted to completely lock said pin within said seat and in which said interconnection system comprises a horizontal hinge (ES, CO), to allow a deviation in the horizontal plane of said road tractor (TR) with respect to a longitudinal development (Z2) of said semi-trailer, arranged in a point between said fifth wheel (RL) and said first frame and/or between said pin and said second frame,
wherein said fifth wheel (RL) comprises an upper surface having a lowered area (ZI), which is V-shaped to guide said pin into said seat when said road tractor (TR) closes up to said semi-trailer, wherein said lowered surface has an axis of symmetry (SI) and wherein said fifth wheel (RL) has a frontal surface (SFR) perpendicular to said axis of symmetry, which faces towards said semi-trailer at least during said closing manoeuvre, in which a female (or male) electrical connector (CFM) is housed,
wherein said fifth wheel (RL) comprises, in said upper surface, first electromagnetic induction coils (B1) and wherein said pin comprises a panel (PNL) in which second electromagnetic induction coils (B2) are housed, wherein said panel is connected to said pin so that when the pin is inserted in said seat (SD), said panel faces said upper surface of the fifth wheel (RL), so that said first coils and said second coils can inter-operate to transfer electrical energy from said first coils to said second coils
wherein said road tractor (TR) comprises a first electrical circuit (CET) and said semi-trailer comprises at least one set of rear lights (LGH) and a second electrical circuit (CER) to supply at least said rear lights, wherein said second circuit is supplied by said first electrical circuit by means of said inter-operation of said first coils (B1) with said second coils (B2) and wherein said semi-trailer comprises a wireless receiver (TR2), supplied by said second electrical circuit, adapted to receive a control signal (SG) to control switch-on of said rear lights and wherein said road tractor (TR) comprises a wireless transmitter (TR1), complementary to said wireless receiver (Tr2), to transmit said control signal for controlling at least said rear lights (LG).

2. A system according to claim 1, wherein said seat (SD) comprises a first pneumatic coaxial duct (P1) and wherein said pin comprises a second pneumatic coaxial duct (P2) arranged so that when the pin is inserted in said seat, said first and second pneumatic ducts are pneumatically interconnected.

3. A system according to claim 1 or 2, further comprising at least one arm (BF) having a first end connected to said second frame (RMF) and a second vertically floating end comprising a male (or female) electrical connector adapted to be operatively interconnected to said female (or male) electrical connector (CMS).

4. A system according to claim 3, wherein said pin and said arm (BF) are connected to a second intermediate frame (RMFI), in turn connected to said second frame by means of said horizontal hinge (CO) preferably coaxial with said pin, or said pin and said arm are connected in a fixed manner to said second frame and wherein said fifth wheel (RL) comprises a horizontal hinge (ES).

5. A system according to any one of the preceding claims, wherein said second frame or said second intermediate frame comprises alignment means (GFD; PN, ZI) to orient said fifth wheel (RL) with respect to the second frame or said second intermediate frame with respect to said fifth wheel (RL) so that said second end of the arm (BF) intercepts said female (or male) connector (CFM).

6. A road tractor (TR) having a relative frame (TRF) and fifth wheel (RL) connected to said frame (TRF) so as to be able to oscillate transversally (OT) and longitudinally (OL) with respect to a longitudinal development (Z1) of said road tractor (TR), in which said fifth wheel (RL) comprises a seat (SD) for a pin (PN) of a semi-trailer (RM) comprising a frame (RMF) and a pin (PN) connected to said frame complementary to said seat (SD) of said fifth wheel (RL) and a locking device (LK) adapted to completely lock, when operational, said pin in said seat.
wherein said fifth wheel (RL) comprises, in said upper surface, first electromagnetic induction coils (B1) and wherein said pin comprises a panel (PNL) in which second electromagnetic induction coils (B2) are housed, wherein said panel is connected to said pin so that when the pin is inserted in said seat (SD), said panel faces said upper surface of the fifth wheel (RL), so that said first coils and said second coils can inter-operate to transfer electrical energy from said first coils to said second coils
wherein said road tractor (TR) comprises a first electrical circuit (CET) and said semi-trailer comprises at least one set of rear lights (LGH) and a second electrical circuit (CER) to supply at least said rear lights, wherein said second circuit is supplied by said first electrical circuit by means of said inter-operation of said first coils (B1) with said second coils (B2) and wherein said semi-trailer comprises a wireless receiver (TR2), supplied by said second electrical circuit, adapted to receive a control signal (SG) to control switch-on of said rear lights and wherein said road tractor comprises a wireless transmitter (TR1), complementary to said wireless receiver (Tr2), to transmit said control signal for controlling at least said rear lights (LG).

7. A road tractor according to claim 6, wherein said fifth wheel (RL) is connected to said frame (TRF) by means of a horizontal hinge (ES), to allow a deviation in the horizontal plane of said road tractor (TR) with respect to a longitudinal development (Z2) of said semi-trailer.

8. A road tractor according to one of the claims 6 or 7, comprising an on-board electrical circuit (CET), and wherein said fifth wheel (RL) comprises an upper surface having a lowered area (ZI), V-shaped to guide said pin into said seat when said road tractor (TR) closes up to said semi-trailer, in which said lowered surface has an axis of symmetry (SI) and in which said fifth wheel (RL) has a frontal surface (SFR) perpendicular to said axis of symmetry, which faces towards said semi-trailer at least during said closing manoeuvre, in which a female (or male) electrical connector (CFM) is housed operatively connected to said on-board electrical circuit and designed to be operatively interconnected to said male (or female) connector (CMS) so as to supply an electrical circuit of said semi-trailer.

9. A road tractor according to one of the claims 6 or 7, comprising an on-board electrical circuit, wherein said fifth wheel (RL) comprises, in said upper surface, first electromagnetic induction coils (B1) complementary to said second electromagnetic induction coils.

10. A semi-trailer (RM) comprising a frame (RMF) and a pin (PN) connected to said frame complementary to said seat (SD) of said fifth wheel (RL) of a road tractor (TR) having a relative frame (TRF) and fifth wheel (RL) connected to said frame (TRF) so as to be able to oscillate transversally (OT) and longitudinally (OL) with respect to a longitudinal development (Z1) of said road tractor (TR), in which said fifth wheel (RL) comprises said seat (SD) for said pin (PN), adapted to be locked in said seat by a locking device (LK) adapted to completely lock, when operational, said pin in said seat,
wherein said fifth wheel (RL) comprises, in said upper surface, first electromagnetic induction coils (B1) and wherein said pin comprises a panel (PNL) in which second electromagnetic induction coils (B2) are housed, wherein said panel is connected to said pin so that when the pin is inserted in said seat (SD), said panel faces said upper surface of the fifth wheel (RL), so that said first coils and said second coils can inter-operate to transfer electrical energy from said first coils to said second coils
wherein said road tractor (TR) comprises a first electrical circuit (CET) and said semi-trailer comprises at least one set of rear lights (LGH) and a second electrical circuit (CER) to supply at least said rear lights, wherein said second circuit is supplied by said first electrical circuit by means of said inter-operation of said first coils (B1) with said second coils (B2) and wherein said semi-trailer comprises a wireless receiver (TR2), supplied by said second electrical circuit, adapted to receive a control signal (SG) to control switch-on of said rear lights and wherein said road tractor comprises a wireless transmitter (TR1), complementary to said wireless receiver (Tr2), to transmit said control signal for controlling at least said rear lights (LG).

11. A semi-trailer according to claim 10, wherein said pin is connected to said frame (RMF) of the semi-trailer by means of a horizontal hinge (CO) to allow a deviation in the horizontal plane of a longitudinal development (Z1) of said road tractor (TR) with respect to a longitudinal development (Z2) of said semi-trailer.

12. A semi-trailer according to one of the claims 10 or 11, further comprising an electrical circuit (CER) and at least one arm (BF) having a first end connected to said frame (RMF) of the semi-trailer and a second vertically floating end comprising a male (or female) electrical connector adapted to be operatively interconnected to said female (or male) electrical connector (CMS), wherein the electrical connector is operatively connected to said electrical circuit (CER) of the semi-trailer so that said electrical circuit (CER) of the semi-trailer is supplied/controlled by the on-board electrical circuit of the road tractor (TR).

13. A semi-trailer according to one of the claims 10 or 11, further comprising an electrical circuit (CER) and wherein said pin comprises a panel (PNL) in which second electromagnetic induction coils (B2) are housed operatively connected to said electrical circuit (CER), in which said panel is connected to said pin so that when the pin is inserted into said seat (SD) of the fifth wheel (RL), said panel faces said upper surface of the fifth wheel (RL), so that said first coils and said second coils can inter-operate to transfer electrical energy from an on-board electrical circuit (CET) of the road tractor (TR) to said electrical circuit of the semi-trailer (CER).

## Patentansprüche

1. Mechanisches Verbindungssystem zwischen einem Zugfahrzeug (TR) und einem Sattelanhänger (RM), umfassend
- ein fünftes Rad (RL), dazu vorgesehen, mit einem ersten Rahmen (TRF) des Zugfahrzeugs verbunden zu werden und umfassend einen Sitz (SD) für einen Stift, und
- einen Stift (PN), dazu vorgesehen, mit einem zweiten Rahmen (RMF) des Sattelaufliegers verbunden zu werden, welcher komplementär zu dem Sitz (SD) des fünften Rades (RL) ausgebildet ist,
wobei das fünfte Rad (RL) mit dem ersten Rahmen derart verbunden ist, dass es in Querrichtung (OT) und in Längsrichtung (OL) bezüglich einer Längserstreckung (Z1) des Zugfahrzeugs (TR) schwingt, wobei das fünfte Rad (RL) eine Blockiereinrichtung (LK) umfasst, dazu vorgesehen, den Stift innerhalb des Sitzes vollständig zu blockieren, wobei das Verbindungssystem ein horizontales Scharnier (ES, CO) umfasst, um eine Auslenkung des Zugfahrzeugs (TR) in der horizontalen Ebene bezüglich einer Längserstreckung (Z2) des Sattelaufliegers zuzulassen, welches in einem Punkt zwischen dem fünften Rad (RL) und dem ersten Rahmen und/oder zwischen dem Stift und dem zweiten Rahmen angeordnet ist,
wobei das fünfte Rad (RL) eine obere Oberfläche mit einer abgesenkten V-förmigen Fläche umfasst, um den Stift in den Sitz zu führen, wenn das Zugfahrzeug (TR) sich dem Sattelauflieger nähert, welche abgesenkte Oberfläche eine Symmetrieachse (SI) aufweist und wobei das fünfte Rad (RL) eine Frontfläche (SFR) aufweist, die senkrecht zu der Symmetrieachse steht, welche Frontfläche dem Sattelauflieger zumindest während des Näherungsmanövers zugewandt ist, und in welcher ein weiblicher (oder männlicher) elektrischer Verbinder (CFM) aufgenommen ist,
wobei das fünfte Rad (RL) in der oberen Oberfläche erste elektromagnetische Induktionsspulen (B1) umfasst und der Stift eine Platte (PNL) umfasst, in welcher zweite elektromagnetische Induktionsspulen (B2) untergebracht sind, wobei die Platte mit dem Stift derart verbunden ist, dass dann, wenn der Stift in den Sitz (SD) eingesetzt ist, die Platte der oberen Oberfläche des fünften Rades (RL) zugewandt ist, so dass die ersten Spulen und die zweiten Spulen miteinander wechselwirken können, um elektrische Energie von den ersten Spulen zu den zweiten Spulen zu übertragen,
wobei das Zugfahrzeug (TR) einen ersten elektrischen Schaltkreis (CET) umfasst und der Sattelauflieger zumindest einen Satz von Rücklichtern (LGH) umfasst, sowie einen zweiten elektrischen Schaltkreis (CER), um zumindest die Rücklichter zu versorgen, wobei der zweite Schaltkreis durch den ersten elektrischen Schaltkreis durch Wechselwirkung der ersten Spulen (B1) mit den zweiten Spulen (B2) versorgt wird, und wobei der Sattelauflieger einen drahtlosen Empfänger (TR2) umfasst, der von dem zweiten elektrischen Schaltkreis versorgt wird und dazu vorgesehen ist, ein Steuersignal (SG) zu empfangen, um das Einschalten der Rücklichter zu steuern und wobei das Zugfahrzeug (TR) einen drahtlosen Sender (TR1) umfasst, der zu dem drahtlosen Empfänger (TR2) komplementär ist, um das Steuersignal zur Steuerung zumindest der Rücklichter (LG) zu übertragen.

2. System gemäß Anspruch 1, bei welchem der Sitz (SD) eine erste pneumatische koaxiale Leitung (P1) umfasst und der Stift eine zweite pneumatische koaxiale Leitung (P2) umfasst, die derart angeordnet sind, dass dann, wenn der Stift in den Sitz eingeführt wird, die ersten und zweiten pneumatischen Leitungen pneumatisch miteinander verbunden werden.

3. System gemäß Anspruch 1 oder 2, ferner umfassend zumindest einen Arm (BF), mit einem ersten Ende, das mit dem zweiten Rahmen (RMF) verbunden ist, und einem zweiten vertikal beweglichen Ende, das einen männlichen (oder weiblichen) elektrischen Verbinder umfasst, der dazu ausgebildet ist, mit dem weiblichen (oder männlichen) elektrischen Verbinder (CMS) wirkungsverbunden zu werden.

4. System gemäß Anspruch 3, bei welchem der Stift und der Arm (BF) mit einem zweiten Zwischenrahmen (RMFI) verbunden sind, welcher wiederum mit dem zweiten Rahmen durch das horizontale Scharnier (CO) vorzugsweise koaxial zu dem Stift verbunden ist, oder der Stift und der Arm sind fest mit dem zweiten Rahmen verbunden, wobei das fünfte Rad (RL) ein horizontales Scharnier (ES) umfasst.

5. System gemäß einem der vorhergehenden Ansprüche, wobei der zweite Rahmen oder der zweite Zwischenrahmen Ausrichtungsmittel (GFD; PN, ZI) zur Ausrichtung des fünften Rades (RL) auf den zweiten Rahmen oder des zweiten Zwischenrahmens auf das fünfte Rad (RL) umfasst, derart, dass das zweite Ende des Arms (BF) den weiblichen (oder männlichen) Verbinder (CFM) aufnimmt.

6. Zugfahrzeug (TR) mit einem Bezugsrahmen (TRF) und einem fünften Rad (RL), das mit dem Rahmen (TRF) verbunden ist, so dass es in Querrichtung (OT) und in Längsrichtung (OL) in Bezug auf eine Längserstreckung (Z1) des Zugfahrzeugs (TR) schwingen kann, wobei das fünfte Rad (RL) einen Sitz (SD) für einen Stift (PN) eines Sattelanhängers (RM) umfasst, welcher einen Rahmen (RMF) und einen Stift (PN) umfasst, der mit dem Rahmen komplementär zu dem Sitz (SD) des fünften Rads (RL) verbunden ist, sowie eine Blockiereinrichtung (LK), dazu ausgebildet, um im Betrieb den Stift in dem Sitz zu blockieren,
wobei das fünfte Rad (RL) in seiner oberen Oberfläche erste elektromagnetische Induktionsspulen (B1) umfasst und der Stift eine Platte (PNL) umfasst, in welcher zweite elektromagnetische Induktionsspulen (B2) untergebracht sind, wobei die Platte mit dem Stift derart verbunden ist, dass dann, wenn der Stift in den Sitz (SD) eingeführt wird, die Platte der oberen Oberfläche des fünften Rades (RL) zugewandt ist, so dass die ersten Spulen und die zweiten Spulen miteinander wechselwirken können, um elektrische Energie von den ersten Spulen auf die zweiten Spulen zu übertragen,
wobei das Zugfahrzeug (TR) einen ersten elektrischen Schaltkreis (CET) umfasst und der Sattelanhänger zumindest einen Satz von Rücklichtern (LGH) und einen zweiten elektrischen Schaltkreis (CER) zur Versorgung zumindest dieser Rücklichter umfasst, welcher zweite Schaltkreis durch den ersten elektrischen Schaltkreis durch die Wechselwirkung der ersten Spulen (B1) mit den zweiten Spulen (B2) versorgt wird und der Sattelanhänger zumindest einen drahtlosen Empfänger (TR2) umfasst, der von dem zweiten elektrischen Schaltkreis versorgt wird, dazu vorgesehen, ein Steuersignal (SG) zur Steuerung des Einschaltens der Rücklichter zu empfangen, und wobei das Zugfahrzeug einen drahtlosen Sender (TR1) umfasst, der zu dem drahtlosen Empfänger (TR2) komplementär ist, zum Senden des Steuersignals zur Steuerung zumindest der Rücklichter (LG).

7. Zugfahrzeug gemäß Anspruch 6, bei welchem das fünfte Rad (RL) mit dem Rahmen (TRF) durch ein horizontales Scharnier (ES) verbunden ist, welches eine Abweichung des Zugfahrzeugs in einer horizontalen Ebene bezüglich einer Längserstreckung (Z2) des Sattelanhängers zulässt.

8. Zugfahrzeug gemäß einem der Ansprüche 6 oder 7, umfassend einen bordeigenen elektrischen Schaltkreis (CET), wobei das fünfte Rad (RL) eine obere Oberfläche mit einer abgesenkten Fläche (ZI) umfasst, die V-förmig ist, um den Stift in den Sitz einzuführen, wenn das Zugfahrzeug (TR) sich dem Sattelauflieger nähert, wobei die abgesenkte Oberfläche eine Symmetrieachse (SI) aufweist und das fünfte Rad (RL) eine Frontfläche (SFR) aufweist, die zu der Symmetrieachse senkrecht steht und welche dem Sattelanhänger zumindest während des Näherungsmanövers zugewandt ist und in welcher ein weiblicher (oder männlicher) elektrischer Verbinder (CFM) aufgenommen ist, welcher operativ mit dem bordeigenen elektrischen Schaltkreis verbunden ist und dazu ausgebildet ist, mit dem männlichen (oder weiblichen) Verbinder (CMS) wirkungsverbunden zu werden, um den elektrischen Schaltkreis des Sattelanhängers zu versorgen.

9. Zugfahrzeug gemäß einem der Ansprüche 6 oder 7, umfassend einen bordeigenen, elektrischen Schaltkreis, wobei das fünfte Rad (RL) in seiner oberen Oberfläche erste elektromagnetische Induktionsspulen (B1) umfasst, die zu den zweiten elektromagnetischen Induktionsspulen komplementär sind.

10. Sattelanhänger (RM), umfassend einen Rahmen (RMF) und einen Stift (PN), der mit dem Rahmen komplementär zu dem Sitz (SD) des fünften Rads (RL) eines Zugfahrzeugs (TR) verbunden ist, welches einen Bezugsrahmen (TRF) und ein fünftes Rad (RL), das mit dem Rahmen (TRF) verbunden ist, aufweist, so dass er in Querrichtung (OT) und in Längsrichtung (OL) bezüglich einer Längserstreckung (Z1) des Zugfahrzeugs (TR) schwingen kann, wobei das fünfte Rad (RL) den Sitz (SD) für den Stift (PN) umfasst, welcher dazu ausgebildet ist, in dem Sitz durch eine Blockiereinrichtung (LK) blockiert zu werden, dazu vorgesehen, im Betrieb den Stift in dem Sitz vollständig zu blockieren,
wobei das fünfte Rad (RL) in seiner oberen Oberfläche erste elektromagnetische Induktionsspulen (B1) umfasst und der Stift eine Platte (PNL) umfasst, in welcher zweite elektromagnetische Induktionsspulen (B2) aufgenommen sind, wobei die Platte mit dem Stift derart verbunden ist, dass dann, wenn der Stift in den Sitz (SD) eingeführt wird, die Platte der oberen Oberfläche des fünften Rads (RL) zugewandt ist, so dass die ersten Spulen und die zweiten Spulen miteinander zur Übertragung elektrischer Energie von den ersten Spulen zu den zweiten Spulen wechselwirken können,
wobei das Zugfahrzeug (TR) einen ersten elektrischen Schaltkreis (CET) umfasst und der Sattelanhänger zumindest einen Satz von Rücklichtern (LGH) und einen zweiten elektrischen Schaltkreis (CER) zur Versorgung zumindest dieser Rücklichter umfasst, wobei der zweite Schaltkreis durch den ersten elektrischen Schaltkreis durch Wechselwirkung der ersten Spulen (B1) mit den zweiten Spulen (B2) versorgt wird und wobei der Sattelanhänger einen drahtlosen Empfänger (TR2) umfasst, der von dem zweiten elektrischen Schaltkreis versorgt wird, dazu vorgesehen, ein Steuersignal (SG) zur Steuerung des Einschaltens der Rücklichter zu empfangen und wobei das Zugfahrzeug einen drahtlosen Sender (TR1) umfasst, komplementär zu dem drahtlosen Empfänger (TR2), zur Übertragung des Steuersignals zur Steuerung zumindest der Rücklichter (LG).

11. Sattelanhänger gemäß Anspruch 10, bei welchem der Stift mit dem Rahmen (RMF) des Sattelanhängers durch ein horizontales Scharnier (CO) verbunden ist, um eine Abweichung in der horizontalen Ebene einer Längserstreckung (Z1) des Zugfahrzeugs (TR) bezüglich einer Längserstreckung (Z2) des Sattelanhängers zu ermöglichen.

12. Sattelanhänger gemäß einem der Ansprüche 10 oder 11, ferner umfassend einen elektrischen Schaltkreis (CER) und zumindest einen Arm (BF) mit einem ersten Ende, das mit dem Rahmen (RMF) des Sattelanhängers verbunden ist und einem zweiten, vertikal beweglichen Ende, das einen männlichen (oder weiblichen) elektrischen Verbinder umfasst, dazu vorgesehen, mit dem weiblichen (oder männlichen) elektrischen Verbinder (CMS) wirkungsverbunden zu werden, wobei der elektrische Verbinder mit dem elektrischen Schaltkreis (CER) des Sattelanhängers deckungsverbunden ist, derart, dass der elektrische Schaltkreis (CER) des Sattelanhängers durch den bordeigenen elektrischen Schaltkreis des Zugfahrzeugs (TR) versorgt/gesteuert zu werden.

13. Sattelanhänger gemäß einem der Ansprüche 10 oder 11, ferner umfassend einen elektrischen Schaltkreis (CER), wobei der Stift eine Platte (PNL) umfasst, in welcher zweite elektromagnetische Induktionsspulen (B2) untergebracht sind, die mit dem elektrischen Schaltkreis (CER) wirkungsverbunden sind, wobei die Platte mit dem Stift derart verbunden ist, dass dann, wenn der Stift in den Sitz (SD) des fünften Rads (RL) eingeführt wird, die Platte der oberen Oberfläche des fünften Rads (RL) zugewandt ist, so dass die ersten Spulen und die zweiten Spulen miteinander wechselwirken können, um elektrische Energie von einem bordeigenen elektrischen Schaltkreis (CET) des Zugfahrzeugs (TR) zu dem elektrischen Schaltkreis des Sattelanhängers (CER) zu übertragen.

## Revendications

1. Système de raccordement mécanique entre un tracteur routier (TR) et une semi-remorque (RM) comprenant :
- une cinquième roue (RL) adaptée pour être raccordée à un premier châssis (TRF) dudit tracteur routier et possédant un siège (SD) pour une broche et
- une broche (PN) adaptée pour être raccordée à un deuxième châssis (RMF) de ladite semi-remorque et complémentaire dudit siège (SD) de ladite cinquième roue (RL),
dans lequel ladite cinquième roue (RL) est raccordée audit premier châssis de manière à osciller transversalement (OT) et longitudinalement (OL) par rapport à un développement longitudinal (Z1) dudit tracteur routier (TR), dans lequel ladite cinquième roue (RL) comprend un dispositif de verrouillage (LK) adapté pour verrouiller complètement ladite broche dans ledit siège et dans lequel ledit système de raccordement comprend une charnière horizontale (ES, CO), pour permettre une déviation dans le plan horizontal dudit tracteur routier (TR) par rapport à un développement longitudinal (Z2) de ladite semi-remorque, agencée dans un point entre ladite cinquième roue (RL) et ledit premier châssis et/ou entre ladite broche et ledit deuxième châssis,
dans lequel ladite cinquième roue (RL) comprend une surface supérieure présentant une zone abaissée (ZI), qui est en forme de V pour guider ladite broche dans ledit siège lorsque ledit tracteur routier (TR) se referme sur ladite semi-remorque, dans lequel ladite surface abaissée présente un axe de symétrie (SI) et dans lequel ladite cinquième roue (RL) comporte une surface frontale (SFR) perpendiculaire audit axe de symétrie, qui est tournée vers ladite semi-remorque au moins durant ladite manœuvre de fermeture, dans laquelle un raccord électrique femelle (ou mâle) (CFM) est logé,
dans lequel ladite cinquième roue (RL) comprend, dans ladite surface supérieure, des premières bobines d'induction électromagnétique (B1) et dans lequel ladite broche comprend un panneau (PNL) dans lequel sont logées des deuxièmes bobines d'induction électromagnétique (B2), dans lequel ledit panneau est raccordé à ladite broche de telle sorte que, lorsque la broche est insérée dans ledit siège (SD), ledit panneau fait face à ladite surface supérieure de la cinquième roue (RL), de telle sorte que lesdites premières bobines et lesdites deuxièmes bobines peuvent interagir pour transférer l'énergie électrique desdites premières bobines vers lesdites deuxièmes bobines
dans lequel ledit tracteur routier (TR) comprend un premier circuit électrique (CET) et ladite semi-remorque comprend au moins un ensemble de feux arrière (LGH) et un deuxième circuit électrique (CER) pour alimenter au moins lesdits feux arrière, dans lequel ledit deuxième circuit est alimenté par ledit premier circuit électrique par le biais de ladite interaction desdites premières bobines (B1) avec lesdites deuxièmes bobines (B2) et dans lequel ladite semi-remorque comprend un récepteur sans fil (TR2), alimenté par ledit deuxième circuit électrique, adapté pour recevoir un signal de commande (SG) afin de commander l'allumage desdits feux arrière et dans lequel ledit tracteur routier (TR) comprend un émetteur sans fil (TR1), complémentaire dudit récepteur sans fil (Tr2), pour émettre ledit signal de commande pour commander au moins lesdits feux arrière (LG).

2. Système selon la revendication 1, dans lequel ledit siège (SD) comprend un premier conduit coaxial pneumatique (P1) et dans lequel ladite broche comprend un deuxième conduit coaxial pneumatique (P2) agencé de telle sorte que, lorsque la broche est insérée dans ledit siège, lesdits premier et deuxième conduits pneumatiques sont pneumatiquement raccordés l'un à l'autre.

3. Système selon la revendication 1 ou 2, comprenant en outre au moins un bras (BF) présentant une première extrémité raccordée audit deuxième châssis (RMF) et une deuxième extrémité verticalement flottante comprenant un raccord électrique mâle (ou femelle) adapté pour être fonctionnellement raccordé audit raccord électrique femelle (ou mâle) (CMS).

4. Système selon la revendication 3, dans lequel ladite broche et ledit bras (BF) sont raccordés à un deuxième châssis intermédiaire (RMFI), quant à lui raccordé audit deuxième châssis à l'aide de ladite charnière horizontale (CO) de préférence coaxiale avec ladite broche, ou ladite broche et ledit bras sont raccordés d'une manière fixe audit deuxième châssis et dans lequel ladite cinquième roue (RL) comprend une charnière horizontale (ES).

5. Système selon l'une quelconque des revendications précédentes, dans lequel ledit deuxième châssis ou ledit deuxième châssis intermédiaire comprend des moyens d'alignement (GFD ; PN, ZI) pour orienter ladite cinquième roue (RL) par rapport au deuxième châssis ou audit deuxième châssis intermédiaire par rapport à ladite cinquième roue (RL) de telle sorte que ladite deuxième extrémité du bras (BF) intercepte ledit raccord femelle (ou mâle) (CFM).

6. Tracteur routier (TR) comportant un châssis relatif (TRF) et une cinquième roue (RL) raccordée audit châssis (TRF) de manière à pouvoir osciller transversalement (OT) et longitudinalement (OL) par rapport à un développement longitudinal (Z1) dudit tracteur routier (TR), dans lequel ladite cinquième roue (RL) comprend un siège (SD) pour une broche (PN) d'une semi-remorque (RM) comprenant un châssis (RMF) et une broche (PN) raccordée audit châssis complémentaire dudit siège (SD) de ladite cinquième roue (RL) et un dispositif de verrouillage (LK) adapté pour verrouiller complètement, lorsqu'il fonctionne, ladite broche dans ledit siège,
dans lequel ladite cinquième roue (RL) comprend, dans ladite surface supérieure, des premières bobines d'induction électromagnétique (B1) et dans lequel ladite broche comprend un panneau (PNL) dans lequel sont logées des deuxièmes bobines d'induction électromagnétique (B2), dans lequel ledit panneau est raccordé à ladite broche de telle sorte que, lorsque la broche est insérée dans ledit siège (SD), ledit panneau fait face à ladite surface supérieure de la cinquième roue (RL), de telle sorte que lesdites premières bobines et lesdites deuxièmes bobines peuvent interagir pour transférer l'énergie électrique desdites premières bobines vers lesdites deuxièmes bobines
dans lequel ledit tracteur routier (TR) comprend un premier circuit électrique (CET) et ladite semi-remorque comprend au moins un ensemble de feux arrière (LGH) et un deuxième circuit électrique (CER) pour alimenter au moins lesdits feux arrière, dans lequel ledit deuxième circuit est alimenté par ledit premier circuit électrique par le biais de ladite interaction desdites premières bobines (B1) avec lesdites deuxièmes bobines (B2) et dans lequel ladite semi-remorque comprend un récepteur sans fil (TR2), alimenté par ledit deuxième circuit électrique, adapté pour recevoir un signal de commande (SG) afin de commander l'allumage desdits feux arrière et dans lequel ledit tracteur routier comprend un émetteur sans fil (TR1), complémentaire dudit récepteur sans fil (Tr2), pour émettre ledit signal de commande pour commander au moins lesdits feux arrière (LG).

7. Tracteur routier selon la revendication 6, dans lequel ladite cinquième roue (RL) est raccordée audit châssis (TRF) à l'aide d'une charnière horizontale (ES), pour permettre une déviation dans le plan horizontal dudit tracteur routier (TR) par rapport à un développement horizontal (Z2) de ladite semi-remorque.

8. Tracteur routier selon l'une des revendications 6 ou 7, comprenant un circuit électrique embarqué (CET), et dans lequel ladite cinquième roue (RL) comprend une surface supérieure présentant une zone abaissée (ZI), en forme de V pour guider ladite broche dans ledit siège lorsque ledit tracteur routier (TR) se referme sur ladite semi-remorque, dans lequel ladite surface abaissée présente un axe de symétrie (SI) et dans lequel ladite cinquième roue (RL) présente une surface frontale (SFR) perpendiculaire audit axe de symétrie, qui est tournée vers ladite semi-remorque au moins pendant ladite manœuvre de fermeture, dans lequel un raccord électrique femelle (ou mâle) (CFM) est logé fonctionnellement raccordé audit circuit électrique embarqué et conçu pour être fonctionnellement raccordé audit raccord mâle (ou femelle) (CMS) de manière à alimenter un circuit électrique de ladite semi-remorque.

9. Tracteur routier selon l'une des revendications 6 ou 7, comprenant un circuit électrique embarqué, dans lequel ladite cinquième roue (RL) comprend, dans ladite surface supérieure, des premières bobines d'induction électromagnétique (B1) complémentaires desdites deuxièmes bobines d'induction électromagnétique (B2).

10. Semi-remorque (RM) comprenant un châssis (RMF) et une broche (PN) raccordée audit châssis complémentaire dudit siège (SD) de ladite cinquième roue (RL) d'un tracteur routier (TR) possédant un châssis relatif (TRF) et une cinquième roue (RL) raccordée audit châssis (TRF) de manière à pouvoir osciller transversalement (OT) et longitudinalement (OL) par rapport à un développement longitudinal (Z1) dudit tracteur routier (TR), dans lequel ladite cinquième roue (RL) comprend ledit siège (SD) pour ladite broche (PN), adaptée pour être verrouillée dans ledit siège par un dispositif de verrouillage (LK) adapté pour verrouiller complètement, lorsqu'il fonctionne, ladite broche dans ledit siège,
dans lequel ladite cinquième roue (RL) comprend, dans ladite surface supérieure, des premières bobines d'induction électromagnétique (B1) et dans lequel ladite broche comprend un panneau (PNL) dans lequel sont logées des deuxièmes bobines d'induction électromagnétique (B2), dans lequel ledit panneau est raccordé à ladite broche de telle sorte que, lorsque la broche est insérée dans ledit siège (SD), ledit panneau fait face à ladite surface supérieure de la cinquième roue (RL), de telle sorte que lesdites premières bobines et lesdites deuxièmes bobines peuvent interagir pour transférer l'énergie électrique desdites premières bobines vers lesdites deuxièmes bobines
dans lequel ledit tracteur routier (TR) comprend un premier circuit électrique (CET) et ladite semi-remorque comprend au moins un ensemble de feux arrière (LGH) et un deuxième circuit électrique (CER) pour alimenter au moins lesdits feux arrière, dans lequel ledit deuxième circuit est alimenté par ledit premier circuit électrique par le biais de ladite interaction desdites premières bobines (B1) avec lesdites deuxièmes bobines (B2) et dans lequel ladite semi-remorque comprend un récepteur sans fil (TR2), alimenté par ledit deuxième circuit électrique, adapté pour recevoir un signal de commande (SG) afin de commander l'allumage desdits feux arrière et dans lequel ledit tracteur routier comprend un émetteur sans fil (TR1), complémentaire dudit récepteur sans fil (Tr2), pour émettre ledit signal de commande pour commander au moins lesdits feux arrière (LG).

11. Semi-remorque selon la revendication 10, dans laquelle ladite broche est raccordée audit châssis (RMF) de la semi-remorque à l'aide d'une charnière horizontale (CO) pour permettre une déviation dans le plan horizontal d'un développement longitudinal (Z1) du tracteur routier (TR) par rapport à un développement longitudinal (Z2) de ladite semi-remorque.

12. Semi-remorque selon l'une des revendications 10 ou 11, comprenant en outre un circuit électrique (CER) et au moins un bras (BF) présentant une première extrémité raccordée audit châssis (RMF) de la semi-remorque et une deuxième extrémité verticalement flottante comprenant un raccord électrique mâle (ou femelle) adapté pour être fonctionnellement raccordé audit raccord électrique femelle (ou mâle) (CMS), dans laquelle le raccord électrique est fonctionnellement raccordé audit circuit électrique (CER) de la semi-remorque de telle sorte que ledit circuit électrique (CER) de la semi-remorque est alimenté/commandé par le circuit électrique embarqué du tracteur routier (TR).

13. Semi-remorque selon l'une des revendications 10 ou 11, comprenant en outre un circuit électrique (CER) et dans laquelle ladite broche comprend un panneau (PNL) dans lequel sont logées des deuxièmes bobines d'induction électromagnétique (B2) fonctionnellement raccordées audit circuit électrique (CER), dans laquelle ledit panneau est raccordé à ladite broche de telle sorte que, lorsque la broche est insérée dans ledit siège (SD) de la cinquième roue (RL), ledit panneau fait face à ladite surface supérieure de la cinquième roue (RL), de telle sorte que lesdites premières bobines et lesdites deuxièmes bobines peuvent interagir pour transférer l'énergie électrique d'un circuit électrique embarqué (CET) du tracteur routier (TR) audit circuit électrique de la semi-remorque (CER).
